# FASCICULE DE BREVET EUROPEEN

(11) **EP 1 355 446 B1**
(45) Date de publication et mention de la délivrance du brevet: **07.06.2006**
(21) Numéro de dépôt: 03354036.0
(22) Date de dépôt: 17.04.2003
(51) Int. Cl.: H04L 9/18

(54) **Chiffrement du contenu d'une mémoire externe à un processeur**
Verschlüsselung des Inhalts eines ausserhalb eines Prozessors angeordneten Speichers
Encryption of the content of a memory which is external to a processor

(30) Priorité: 19.04.2002 FR 0204918
(43) Date de publication de la demande: 22.10.2003
(73) Titulaire: STMicroelectronics S.A., 92120 Montrouge (FR)
(72) Inventeur: Courcambeck, Stephen, 83270 Saint Cyr sur Mer (FR); Anguille, Claude, 13090 Aix en Provence (FR)
(74) Mandataire: de Beaumont, Michel

(56) Documents cités:
- US-A- 5 438 622
- US-A- 5 825 878
- US-A- 5 982 887

## Description

La présente invention concerne de façon générale le chiffrement ou cryptage de données, de programme ou plus généralement de codes binaires devant être stockés dans une ou plusieurs mémoires, externes à un processeur intégré chargé d'exploiter ces codes.

Un exemple d'application de la présente invention concerne le chiffrement de programmes exécutables téléchargés par un dispositif (ordinateur, lecteur de données vidéo ou audio, appareil pourvu d'un microprocesseur d'exécution de programmes téléchargeables, etc.) dans lequel ces programmes doivent être stockés. Le téléchargement peut, par exemple, faire appel à l'internet. Plus précisément, la présente invention concerne les programmes ou données pour lesquels on souhaite empêcher qu'un utilisateur non autorisé y accède de façon exploitable.

On fera par la suite référence au terme "données" pour désigner indifféremment n'importe quel code binaire qu'il s'agisse de programmes exécutables, ou de données traitées par ces programmes.

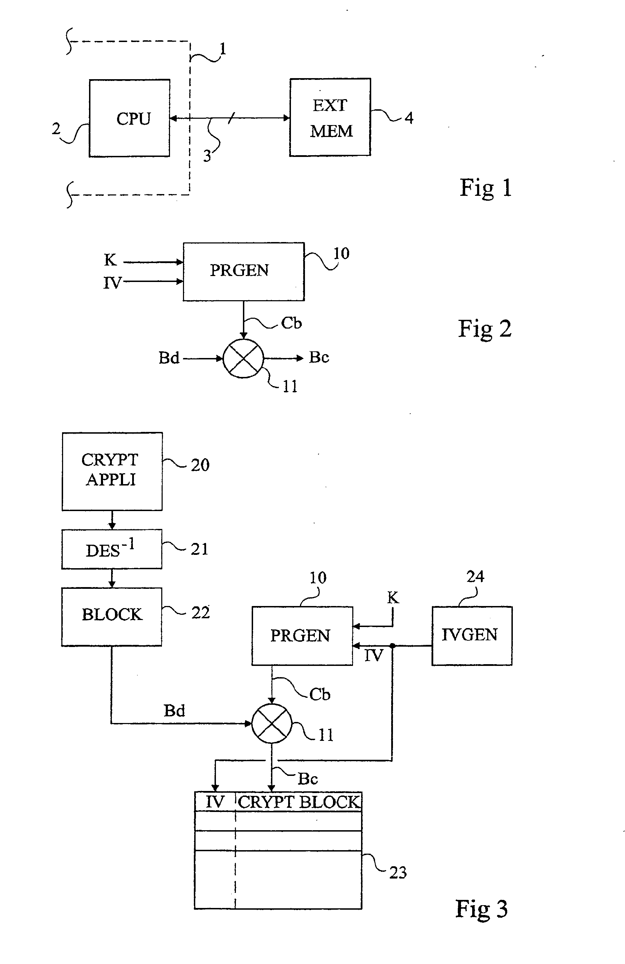

La figure 1 illustre, de façon partielle et très schématique, la structure d'un système à microprocesseur et à mémoire externe auquel s'applique la présente invention. On définit une zone 1 dite sécurisée à l'intérieur de laquelle se trouve une unité centrale de traitement (CPU) communiquant, par l'intermédiaire d'un ou plusieurs bus 3, avec une mémoire 4 externe (EXT MEM) à la zone sécurisée 1. La zone 1 est, par exemple, le microprocesseur intégré ou, plus généralement, un ou plusieurs circuits intégrés de traitement de données définissant une zone sécurisée à l'intérieur de laquelle on considère que les données traitées ne sont pas susceptibles d'être piratées. En pratique, la zone sécurisée 1 est le plus souvent constituée par une unique puce de circuit intégré, la mémoire externe 4 étant une autre puce.

Le chiffrement auquel s'applique la présente invention concerne celui de toute donnée transitant sur le ou les bus 3, entre la mémoire 4 et l'unité centrale 2 ou plus généralement la zone 1. Ce chiffrement consiste à coder les données stockées au moyen d'une clé connue par le processeur intégré. Généralement, cette clé de cryptage lui est transmise par un processus de chiffrement asymétrique depuis le système distant fournissant le programme, de façon à ce que le processeur la stocke dans une zone interne protégée, et l'utilise à la fois pour décrypter le programme téléchargé et pour chiffrer les données en mémoire externe.

Un exemple de solution pour chiffrer une mémoire, externe à un microprocesseur intégré sur une seule puce, est décrit dans le brevet américain US-A-5 825 878. La solution préconisée par ce document est d'intégrer le contrôleur mémoire à accès direct avec le coeur du microprocesseur ainsi qu'une mémoire interne et un circuit logique de cryptage/décryptage.

D'autres solutions de chiffrement de programmes dans une mémoire externe à un microprocesseur sont décrites, par exemple, dans les brevets américains US-A-5 982 887 et US-A-6 061 449.

Dans tous les cas, le programme chiffré dans la mémoire externe est indépendant de la puce constituant le microprocesseur d'exécution.

Un premier inconvénient est que la clé de chiffrement du programme stocké dans la mémoire externe au microprocesseur n'est pas dédiée à la puce qui chiffre les données. C'est ce qui fait qu'en cas de piratage d'une des clés, celle-ci peut être réutilisée pour déchiffrer n'importe quelle mémoire externe dans la mesure où toutes les puces utilisent un même type de chiffrement.

Un deuxième inconvénient est lié à la méthode de chiffrement utilisé. On utilise généralement des chiffrements par blocs par des algorithmes de type DES ou AES selon une technique dite ECB (Electronic Code Book). La taille d'un bloc dépend de l'algorithme de chiffrement utilisé. Dans une technique ECB par carnet de codage électronique, deux blocs identiques sont chiffrés de la même manière. Une faiblesse est alors des attaques possibles par une technique dite de dictionnaire où la redondance de messages chiffrés de façon identique peut permettre l'identification du message en clair. Par opposition à la technique ECB, on connaît une autre technique de chiffrement par blocs dans laquelle le code chiffré dépend des blocs précédents. Cette technique (CBC, Cypher Block Chaining) nécessite un accès toujours identique et séquentiel à la mémoire, ce qui la rend incompatible pour le chiffrement d'un programme pour lequel on souhaite avoir des accès directs aléatoires dans la mémoire externe.

Plus généralement, un problème particulier se pose lorsque l'on souhaite avoir accès à la mémoire externe de façon directe par opposition à un fonctionnement séquentiel. Dans un tel cas, le chiffrement en écriture dans la mémoire et le déchiffrement en lecture de cette mémoire doivent être effectués, en continu et séquentiellement dans le même ordre, par le processeur qui les exploite. Ces besoins d'accès direct et de chiffrement en continu rendent inapplicables les solutions classiques pour chiffrer efficacement des données d'une mémoire externe par blocs.

La présente invention vise à proposer une nouvelle technique de chiffrement, par un circuit intégré, d'un ensemble de données à stocker dans une mémoire externe à ce circuit.

L'invention vise plus particulièrement à proposer une solution de chiffrement qui permette d'individualiser le chiffrement selon la puce de circuit intégré à laquelle est associée la mémoire externe.

L'invention vise également à proposer un chiffrement compatible avec le téléchargement d'applications cryptées au moyen de systèmes à clés dites publique et privée.

L'invention vise également à proposer un chiffrement insensible aux attaques dites par dictionnaire.

L'invention vise également à proposer un chiffrement qui soit compatible avec un accès direct aléatoire à la mémoire externe.

Pour atteindre ces objets et d'autres, l'invention prévoit un procédé de chiffrement par un processeur intégré d'un ensemble de données à stocker dans une mémoire, consistant à effectuer, en continu suivant un flux de données, les étapes suivantes :
découper le flux de données en blocs de taille prédéterminée et, pour chaque bloc :
   générer une clé de chiffrement au moyen d'un générateur pseudo aléatoire mettant en oeuvre un algorithme de chiffrement en continu en fonction d'un clé propre au circuit intégré et d'un vecteur d'initialisation changeant à chaque bloc ;
   combiner en continu le bloc de données et la clé correspondante ; et
   mémoriser dans ladite mémoire chaque bloc chiffré et le vecteur d'initialisation ayant servi à le chiffrer.

Selon un mode de mise en oeuvre de la présente invention, la combinaison est du type Ou-Exclusif.

Selon un mode de mise en oeuvre de la présente invention, la taille de la clé de chiffrement correspond à la taille des blocs.

Selon un mode de mise en oeuvre de la présente invention, ladite clé propre au processeur intégré est générée par ce dernier.

Selon un mode de mise en oeuvre de la présente invention, le procédé est appliqué au chiffrement d'un programme exécutable à stocker, pour exécution ultérieure, dans ladite mémoire.

La présente invention prévoit également un procédé de déchiffrement de blocs de données stockés dans une mémoire consistant à effectuer des étapes suivantes :
lire chaque bloc et un vecteur d'initialisation associé dans ladite mémoire ; et
appliquer, pour chaque bloc, un algorithme de déchiffrement en continu utilisant, pour générer une clé de déchiffrement, le vecteur d'initialisation associé au bloc concerné.

Selon un mode de mise en oeuvre de la présente invention, les blocs de données déchiffrés sont stockés dans une mémoire cache intégrée au processeur.

Selon un mode de mise en oeuvre de la présente invention, les données chiffrées par bloc et les vecteurs d'initialisation associés sont stockés dans une mémoire cache intégrée au processeur, avant déchiffrement.

Selon un mode de mise en oeuvre de la présente invention, ladite mémoire est externe au circuit intégré.

L'invention prévoit également un processeur d'exploitation de données stockées dans une mémoire externe.

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
la figure 1, décrite précédemment représente, partiellement et de façon très schématique, un circuit intégré associé à une mémoire externe du type auquel s'applique la présente invention ;
la figure 2 est un schéma simplifié d'un générateur de chiffrement utilisé selon la présente invention ;
la figure 3 illustre, sous forme de blocs, un mode de mise en oeuvre du procédé de l'invention dans une phase de chiffrement ;
la figure 4 illustre, sous forme de blocs, un exemple de mise en oeuvre de l'invention dans une phase de déchiffrement ;
la figure 5 représente, partiellement et schématiquement, un microprocesseur intégré associé à une mémoire externe selon un premier mode de réalisation de la présente invention ; et
la figure 6 représente, partiellement et schématiquement, un microprocesseur intégré associé à une mémoire externe selon un deuxième mode de réalisation de la présente invention.

Les mêmes éléments ont été désignés par les mêmes références aux différentes figures. Pour des raisons de clarté, seules les étapes du procédé et les éléments qui sont nécessaires à la compréhension de l'invention ont été représentés aux figures et seront décrits par la suite. En particulier, tous les éléments du processeur intégré n'ont pas été détaillés, l'invention exploitant des composants connus pour sa mise en oeuvre.

Une caractéristique de la présente invention est de chiffrer des données (programmes, données, codes binaires quelconques) devant être stockées dans une mémoire externe associée à un microprocesseur intégré, au moyen d'une clé dite interne, propre au microprocesseur, qui est différente de la clé éventuelle de cryptage communiquée par le fournisseur de ces données. Cette clé interne peut être individualisée par groupe de données (par programme). Ainsi, selon l'invention, lorsqu'un programme est téléchargé pour être stocké dans la mémoire externe associée au processeur intégré, le chiffrement n'utilise pas la clé liée à l'application (ou programme) mais une clé interne associée à la puce du microprocesseur. Cela permet de rendre les mémoires externes dépendantes des processeurs intégrés avec lesquelles elles sont associées, ce qui constitue un atout en terme de sécurité contre des piratages des données par des utilisateurs non autorisés.

Une autre caractéristique de la présente invention est de prévoir un chiffrement et un déchiffrement en continu lors des transferts entre le microprocesseur intégré et la mémoire externe. Selon l'invention, ce chiffrement continu est obtenu à partir d'un découpage en blocs des données stockées. L'invention prévoit également que le chiffrement fasse appel à un vecteur d'initialisation pour chaque bloc, ce vecteur étant fonction du bloc traité. On s'affranchit ainsi des problèmes liés aux chiffrements en continu qui sont classiquement incompatibles avec les accès directs aléatoires à une mémoire.

En d'autres termes, l'invention prévoit un chiffrement continu, découpé par blocs, avec l'emploi d'un vecteur d'initialisation pour obtenir un flux de codons constituant des clés de chiffrement respectives des blocs.

La figure 2 représente, de façon schématique, un chiffrement en continu au moyen de vecteurs d'initialisation à l'aide d'un générateur de chiffrement (cryptosystème). Un tel chiffrement est basé sur l'utilisation d'un générateur 10 pseudo aléatoire (PRGEN) fournissant une clé Cb de chiffrement d'un bloc de données Bd au moyen d'une porte 11 de type Ou-Exclusif (XOR). La porte 11 fournit le résultat chiffré, c'est-à-dire un bloc Bc chiffré au moyen de la clé Cb. La clé Cb fournie par le générateur 10 est basée sur une clé interne K correspondant selon l'invention à une clé propre au microprocesseur, et sur un vecteur d'initialisation IV, ces deux grandeurs étant exploitées par un algorithme de génération de nombres pseudo aléatoires. Les grandeurs K, IV sont des mots binaires dont les tailles respectives dépendent de la sécurité souhaitée en terme de nombre de combinaisons possible. La clé Cb est un mot binaire dont la taille dépend, selon l'invention et comme on le verra par la suite, de la taille des blocs à chiffrer. Le générateur 10 est pseudo aléatoire en ce sens que pour une clé K donnée, il fournit toujours la même clé Cb pour un même vecteur IV d'initialisation. Selon l'invention, le vecteur d'initialisation IV est fonction du bloc Bd chiffré comme cela sera décrit par la suite.

Le schéma de la figure 2 est généralement connu pour procurer un chiffrement en continu, c'est-à-dire dans lequel le message d'entrée de la porte Ou-Exclusif 11 est chiffré bit par bit par la clé fournie par le générateur 10 en continu. On fait alors référence à ce que l'on appelle un générateur de codons. Ces codons forment les clés de chiffrement Cb de l'invention.

Des algorithmes de chiffrement en continu sont décrits, par exemple, dans l'ouvrage "Cryptographie appliquée" de Bruce SCHNEIER deuxième édition édité par WILEY en 1997, pages 209 à 226.

Le générateur pseudo aléatoire 10 est l'élément de base des algorithmes de chiffrement en continu. Par exemple, il pourra s'agir d'un algorithme choisi parmi ceux connus sous les dénominations RC4, SEAL, WAKE, ou plus généralement n'importe quel algorithme de chiffrement en continu pouvant conditionner la génération pseudo aléatoire de la clé ou codon Cb à partir des grandeurs K et IV. Toutefois, selon l'invention, ce chiffrement en continu est effectué par blocs avec un vecteur d'initialisation différent à chaque bloc. La "graine" du générateur 10 change à chaque bloc puisqu'elle est composée d'une combinaison des grandeurs K et IV.

La figure 3 illustre un mode de mise en oeuvre d'un chiffrement en continu de blocs de taille fixe d'un programme (bloc 20, CRYPT APPLI) crypté par un fournisseur d'applications, par exemple, par un algorithme de type DES. Pour la mise en oeuvre de l'invention, on commence alors par décrypter le programme (bloc 21, DES-1). Une fois décrypté, on effectue suivant l'invention un découpage du programme par blocs (bloc 22, BLOCKS) afin d'obtenir un flux de blocs Bd devant être chiffrés avant stockage dans une mémoire 23, externe au microprocesseur.

Le chiffrement opéré selon l'invention reprend le schéma de la figure 2 en ce sens qu'il utilise un générateur pseudo aléatoire 10 (PRGEN) fournissant, pour chaque bloc, une clé de chiffrement Cb à partir d'une clé K interne et propre au microprocesseur et d'un vecteur d'initialisation IV. Les vecteurs d'initialisation IV sont, de préférence, générés par un générateur aléatoire (bloc 24 IVGEN) associé au microprocesseur et fournissant, pour chaque bloc, une suite de bits quelconques. Cela permet de préserver un accès aléatoire direct ultérieur à n'importe quel bloc stocké dans la mémoire 23.

La taille (nombre de bits) des clés Cb générées est, selon l'invention, égales à la taille des blocs afin de permettre un chiffrement en continu des blocs.

Selon l'invention, le vecteur d'initialisation généré par le générateur 24 est stocké dans la mémoire 23 en même temps que le bloc crypté Bc (CRYPT BLOCK) issu de la porte 11. Par exemple, les bits consécutifs du vecteur d'initialisation IV sont placés en début du mot mémoire stockant le bloc Bc. Tout autre configuration pourrait être prévue, l'important étant de pouvoir associer, à chaque bloc chiffré stocké dans la mémoire externe, un vecteur d'initialisation qui lui est propre.

Le fait que le vecteur d'initialisation soit stocké en clair dans la mémoire externe ne constitue pas un obstacle au sens de l'invention. En effet, la connaissance de ce vecteur d'initialisation ne permet pas de déchiffrer le bloc. Il faut en outre connaître la clé K propre au microprocesseur ayant chiffré ce bloc, ainsi que l'algorithme de génération des codons qui peut être différent d'un processeur à un autre. On voit ici ressortir un avantage induit par l'invention qui est que, tout en rendant le chiffrement dépendant du microprocesseur qui l'effectue, sa mise en oeuvre est transparente pour le fournisseur des données. Le chiffrement effectué en interne est indépendant du cryptage effectué par le fournisseur des données.

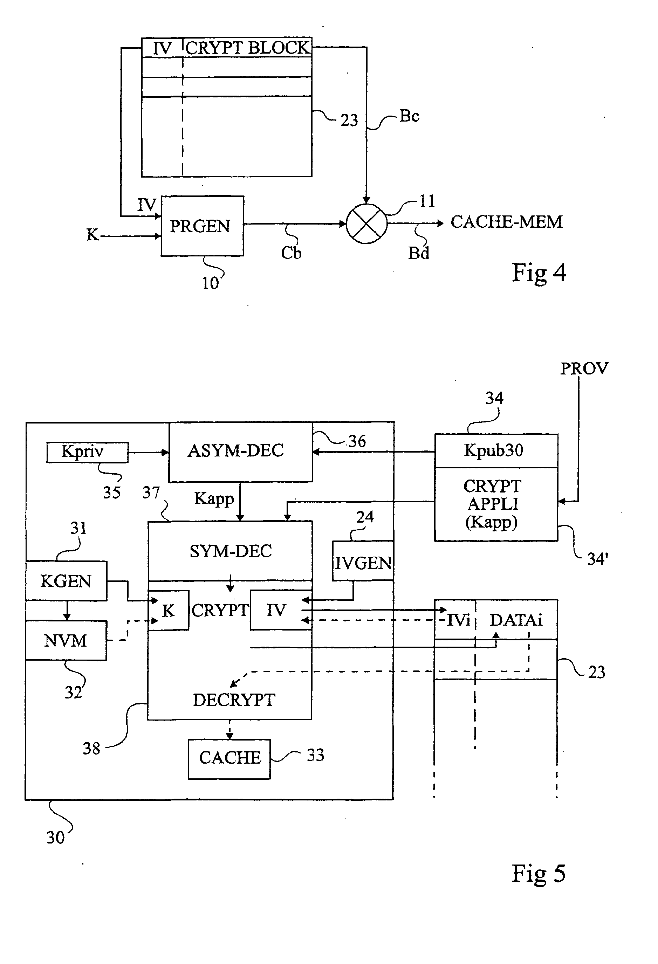

La figure 4 représente un mode de mise en oeuvre d'un déchiffrement opéré, selon l'invention, par un microprocesseur intégré exploitant les données chiffrées dans la mémoire externe 23. Selon l'invention, le déchiffrement fait appel au même générateur pseudo aléatoire 10 de clés Cb et à la même porte Ou-Exclusif 11. Le générateur pseudo aléatoire utilise cette fois, comme "graines" de génération des clés Cb, la clé K propre au processeur intégré et le vecteur d'initialisation IV lu dans la mémoire 23 et associé au bloc courant à déchiffrer. La combinaison de type Ou-Exclusif du bloc Bc avec la clé Cb fournit le bloc de données déchiffrées Bd qui est stocké dans une mémoire cache (CACHE MEM) du microprocesseur. Bien que cela n'ait pas été indiqué en relation avec la figure 3, cette mémoire cache est également utilisée lors du chiffrement pour stocker temporairement les blocs découpés à chiffrer. De préférence, la longueur d'un bloc est la même que la longueur d'une ligne de la mémoire cache.

La figure 5 représente, partiellement et schématiquement, un microprocesseur intégré 30, associé à une mémoire externe 23 selon un premier mode de réalisation de la présente invention. Le mode de réalisation de la figure 5 intègre les éléments nécessaires à la mise en oeuvre du procédé de chiffrement/déchiffrement illustré par les figures 3 et 4. Ainsi, le microprocesseur 30 comporte un générateur 31 (KGEN) d'une clé K propre au circuit. Cette clé, une fois générée, est stockée dans une mémoire non volatile 32 (NVM). Le générateur 31 est, par exemple, un générateur aléatoire ou un circuit exploitant un mot binaire issu d'un réseau de paramètres physiques de la puce intégrant le microprocesseur 30. Dans ce dernier cas, la clé K peut être générée à chaque fois que l'on en a besoin. En variante, la clé K est générée de façon externe et stockée dans la mémoire 32. Toutefois, une génération au sein même du microprocesseur est préférable pour des questions de sécurité contre d'éventuels piratages. Le circuit 30 intègre également le générateur 24 (IVGEN) de vecteurs d'initialisation IV ainsi qu'une mémoire cache 33 (CACHE).

Le mode de réalisation illustré par la figure 5 s'applique à un microprocesseur susceptible de recevoir des programmes (ou plus généralement n'importe quelles données numériques) d'une source externe. Par exemple, un fournisseur (PROV) envoie, dans une mémoire (par exemple une mémoire RAM) 34', les codes d'un programme (CRYPT APPLI) crypté par une clé secrète Kapp, cette clé Kapp étant, par exemple, chiffrée par un algorithme asymétrique basé sur un envoi de clé publique par le fournisseur PROV ou par le microprocesseur selon la clé avec laquelle est cryptée la clé Kapp. Dans l'exemple représenté, la puce reçoit la clé Kapp cryptée par sa clé publique (désignée par Kpub30, bloc 34). Pour permettre un décryptage du programme, le processeur 30 comprend (de façon logicielle ou câblée) un décodeur asymétrique 36 (ASYM-DEC) exploitant une clé privée Kpriv stockée dans un élément de mémorisation 35 du processeur 30 (en variante, une clé publique donnée par le fournisseur PROV). Le décodeur 36 décrypte, de façon parfaitement classique, la clé Kapp. Cette clé de cryptage du programme sert alors, à un bloc 37 de déchiffrement symétrique (SYM-DEC), pour décoder l'application cryptée lue dans la mémoire 34. Jusque là, le processeur 30 exécute des étapes classiques de décryptage d'un programme crypté par un algorithme à clés privée et publique.

Selon l'invention, le circuit 30 intègre (de façon câblée ou non) une unité 38 de chiffrement/déchiffrement (CRYPT-DECRYPT) par bloc en continu, mettant en oeuvre le procédé illustré par les figures 3 et 4. Ainsi, l'unité 38 contient, bien que non représenté en figure 5, le générateur pseudo aléatoire 10 ainsi que la porte Ou-Exclusif 11.

En figure 5, des flèches en traits pleins illustrent le fonctionnement du circuit 30 lors d'un chiffrement d'une application téléchargée, et des flèches en pointillés illustrent le fonctionnement lors d'un déchiffrement du programme stocké dans la mémoire (ici, exécutable) 23.

Ainsi, l'entité 38 exploite la clé K générée par le générateur 31 lors du chiffrement du programme ainsi que les vecteurs d'initialisation successifs fournis par le générateur 24. Par contre, en déchiffrement, on utilise la clé K stockée dans la mémoire non volatile 32 et les vecteurs d'initialisation successifs IVi associés aux blocs de données DATAi stockés dans la mémoire 23. Lors du chiffrement (CRYPT), les blocs de données découpés par l'entité 38 sont stockés dans la mémoire 23. Lors du déchiffrement (DECRYPT), ces blocs lus (par accès direct aléatoire) sont, une fois déchiffrés, stockés dans la mémoire cache 33 pour exécution.

La taille des blocs est, de préférence, adaptée en fonction du programme téléchargé pour que, tout en restant compatible avec la taille de la mémoire cache 33, chaque bloc corresponde à une ou plusieurs instructions complètes.

Un avantage de la présente invention est que les données chiffrées le sont par une clé unique identifiant la puce de circuit intégré les traitant. Par conséquent, la connaissance de la clé ne permet pas une utilisation pirate, dans la mesure où elle ne permet pas de déchiffrer les mêmes données si elles sont stockées dans une mémoire externe associée à un autre microprocesseur intégré.

Un autre avantage de la présente invention est que, comme le microprocesseur intégré génère lui-même ses propres clés pour stocker les données dans la mémoire externe, il est possible de générer une nouvelle clé à chaque fois que ces données sont utilisées. Par exemple, dans le cas d'un programme, lorsque le programme est exécuté, on chiffre les blocs qui sont réécrits depuis la mémoire cache vers la mémoire externe avec de nouvelles clés. Ces nouvelles clés (codons) sont obtenues en changeant la clé K et/ou les vecteurs d'initialisation des blocs. Un avantage d'une telle variante est que les clés de chiffrement changent alors à chaque fois qu'un programme est exécuté, ce qui rend encore plus difficile un piratage éventuel.

Un avantage d'utiliser un algorithme de chiffrement continu est que ce genre d'algorithme est nettement plus rapide que des algorithmes de chiffrement par bloc de type AES ou DES. Une opération de type Ou-Exclusif pour un chiffrement ou un déchiffrement ainsi qu'une stimulation (déclenchement du générateur pseudo aléatoire) suffisent.

Dans le mode de réalisation illustré par la figure 5, les opérations les plus lourdes (en terme de durée) sont exécutées lors de l'installation du programme pour stockage de façon chiffrée dans la mémoire 23. Toutefois, par rapport au temps nécessaire aux ressources machines utilisées pour le décryptage du programme reçu de l'extérieur (PROV), le chiffrement ajouté par l'invention est négligeable. De plus, pour les opérations ultérieures, le déchiffrement de l'invention est considérablement plus rapide qu'en maintenant un chiffrement de type DES.

On notera toutefois que l'invention s'applique également au chiffrement d'un programme téléchargé non crypté, c'est-à-dire en omettant les éléments de décodage asymétrique et symétrique 36 et 37 de la figure 5.

Selon une variante, on pourra associer, au bloc chiffré DATAi et au vecteur d'initialisation IV, une valeur de contrôle d'intégrité dans la mémoire 23.

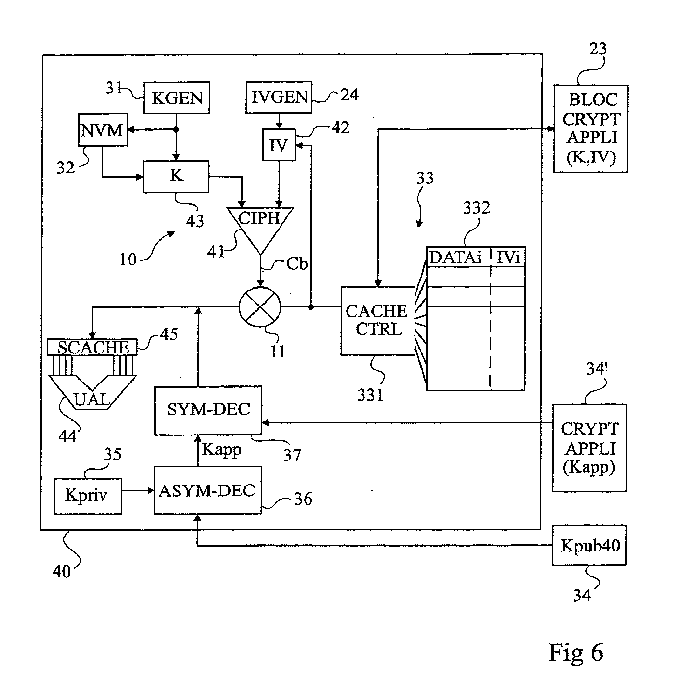

La figure 6 représente un deuxième mode de réalisation d'un processeur intégré 40 mettant en oeuvre l'invention. Selon ce mode de réalisation, le chiffrement/déchiffrement est effectué à l'entrée du processeur proprement dit, c'est-à-dire en entrée de son unité arithmétique et logique 44. Le but poursuivi est alors de chiffrer le contenu de la mémoire cache. Cet objectif paraît contradictoire avec le rôle d'une telle mémoire qui est d'accélérer le traitement d'un programme par rapport aux besoins d'accès en lecture d'une mémoire externe. Toutefois, par la mise en oeuvre de l'invention, un chiffrement reste possible dans la mesure où il est effectué en continu et au moyen d'une simple porte de type Ou-Exclusif qui ne ralentit que de façon négligeable l'exécution du programme ou le traitement des données.

Dans le mode de réalisation de la figure 6, on suppose comme en figure 5, le chargement ou initialisation d'un programme lui-même crypté au moyen d'un algorithme symétrique. Par conséquent, on retrouve en figure 6 les blocs 36 (ASYM-DEC), 37 (SYM-DEC) recevant respectivement la clé de l'application Kapp cryptée par la clé publique de la puce 40 (désignée par Kpub40, bloc 34), et le programme chiffré CRYPT APPLI (bloc 34'). Dans l'exemple représenté, le bloc 36 de décryptage asymétrique reçoit par ailleurs la clé privée Kpriv du bloc 35.

On trouve également, comme en figure 5, le générateur 31 (KGEN) de la clé K, le générateur 24 (IVGEN) de vecteurs d'initialisation IV, et la mémoire non volatile 32 (NVM) de stockage de la clé K. En figure 6, le générateur pseudo aléatoire 10 a été illustré sous la forme d'un élément 41 de chiffrement (CIPH) recevant en entrée un vecteur d'initialisation IV stocké dans un registre 42 et la clé K stockée dans un registre 43, et fournissant en sortie le code Cb à la porte 11. Selon ce mode de réalisation, cette porte 11 est intercalée entre la mémoire cache 33 et l'unité arithmétique et logique 44 du processeur. En fait, on prévoit une seule ligne de mémoire cache 45 (SCACHE) supplémentaire en entrée de l'unité arithmétique et logique 44. Cette ligne est alimentée par la sortie de la porte 11. En figure 6, la mémoire cache 33 a été détaillée sous la forme d'un contrôleur de cache 331 (CACHE CTRL), alimenté par des lignes 332 de mémoire cache proprement dites. Selon ce mode de réalisation, les données stockées dans les lignes 332 de la mémoire cache sont chiffrées et correspondent donc aux blocs stockés, comme en figure 5, dans la mémoire externe 23 qui contient donc les données ou le programme (BLOC CRYPT APPLI) chiffrés au moyen de la clé K et des vecteurs IV. Ainsi, on retrouve le vecteur d'initialisation IVi et les données DATAi de chaque bloc dans les lignes de la mémoire cache 332.

Le fonctionnement du mode de réalisation illustré par la figure 6 se déduit du fonctionnement exposé précédemment en relation avec la figure 5. On notera simplement que, lors du chiffrement, le flux issu du bloc 37 est découpé en blocs pour être chiffré par la porte 11 et transite par le contrôleur de mémoire cache sans être stocké dans les lignes 332, mais en étant dirigé directement vers la mémoire 23.

Bien entendu, la présente invention est susceptible de diverses variantes et modifications qui apparaîtront à l'homme de l'art. En particulier, l'invention pourra être mise en oeuvre avec n'importe quel algorithme de chiffrement continu classique, conditionnant le générateur pseudo aléatoire à partir de la clé K et des vecteurs IV. De plus, la réalisation pratique de l'invention est à la portée de l'homme du métier à partir des indications fonctionnelles données ci-dessus. A cet égard, on notera que selon un mode de réalisation de l'invention, les différents outils de chiffrement et déchiffrement (même ceux utilisés une seule fois lors du stockage des données provenant de l'extérieur) sont réalisés en logique câblée. Toutefois, une mise en oeuvre logicielle reste envisageable. En outre, d'autres fonctions de combinaison que le Ou-Exclusif pourront être prévues, le Ou-Exclusif représentant toutefois un choix préféré en raison de sa simplicité (donc rapidité).

## Revendications

1. Procédé de chiffrement par un processeur intégré (30, 40) d'un ensemble de données à stocker dans une mémoire (23), **caractérisé en ce qu'**il consiste à effectuer, en continu suivant un flux de données, les étapes suivantes :
découper le flux de données en blocs de taille prédéterminée et, pour chaque bloc :
générer une clé de chiffrement (Cb) au moyen d'un générateur pseudo aléatoire (10) mettant en oeuvre un algorithme de chiffrement en continu en fonction d'un clé (K) propre au circuit intégré et d'un vecteur d'initialisation (IV) changeant à chaque bloc ;
combiner en continu le bloc de données et la clé correspondante (Cb) ; et
mémoriser dans ladite mémoire (23) chaque bloc chiffré et le vecteur d'initialisation ayant servi à le chiffrer.

2. Procédé selon la revendication 1, **caractérisé en ce que** la combinaison est du type Ou-Exclusif.

3. Procédé selon la revendication 1 ou 2, **caractérisé en ce que** la taille de la clé de chiffrement (Cb) correspond à la taille des blocs.

4. Procédé selon l'une quelconque des revendications 1 à 3, **caractérisé en ce que** ladite clé (K) propre au processeur intégré (30, 40) est générée par ce dernier.

5. Procédé selon l'une quelconque des revendications 1 à 4, **caractérisé en ce qu'**il est appliqué au chiffrement d'un programme exécutable à stocker, pour exécution ultérieure, dans ladite mémoire (23).

6. Procédé de déchiffrement par un processeur intégré de blocs de données stockés dans une mémoire (23), **caractérisé en ce qu'**il consiste à effectuer des étapes suivantes :
lire chaque bloc et un vecteur d'initialisation associé dans ladite mémoire (23), ledit vecteur changeant à chaque bloc ; et
appliquer, pour chaque bloc, un algorithme de déchiffrement en continu en fonction d'un clé (K) propre au circuit intégré et utilisant, pour générer une clé de déchiffrement (Cb), le vecteur d'initialisation associé au bloc concerné.

7. Procédé selon la revendication 6, **caractérisé en ce que** les blocs de données déchiffrés sont stockés dans une mémoire cache (33) intégrée au processeur (30).

8. Procédé selon la revendication 6, **caractérisé en ce que** les données chiffrées par bloc et les vecteurs d'initialisation associés sont stockés dans une mémoire cache (332) intégrée au processeur (40), avant déchiffrement.

9. Procédé selon l'une quelconque des revendications 6 à 8, **caractérisé en ce que** ladite mémoire (23) est externe au circuit intégré.

10. Processeur (30, 40), d'exploitation de données stockées dans une mémoire externe (23), **caractérisé en ce qu'**il comporte des moyens de mise en oeuvre du procédé de chiffrement selon l'une quelconque des revendications 1 à 5, et du procédé de déchiffrement selon l'une quelconque des revendications 6 à 9.

## Claims

1. A method of cyphering by an integrated processor (30, 40) a set of data to be stored in a memory (23), **characterized in that** it consists of performing, in a continuous operation in accordance with a data flow, the steps of:
dividing the data flow into blocks of predetermined size and, for each block:
generating a cyphering key (Cb) by means of a pseudorandom generator (10) implementing a continuous algorithm of cyphering according to a key (K) specific to the integrated circuit and to an initialization vector (IV) changing for each block;
combining the data block and the corresponding key (Cb) in a continuous operation; and
storing in said memory (23) each cyphered block and the initialization vector used to cypher it.

2. The method of claim 1, wherein the combination is of X-OR type.

3. The method of claim 1 or 2, **characterized in that** the size of the cyphering key (Cb) corresponds to the block size.

4. The method of any of claims 1 to 3, **characterized in that** said key (K) specific to the integrated processor (30, 40) is generated by said processor.

5. The method of any of claims 1 to 4, **characterized in that** it is applied to the cyphering of a target program to be stored, for subsequent execution, in said memory (23).

6. A method for decyphering by an integrated processor data blocks stored in a memory (23), **characterized in that** it consists of performing the steps of:
reading each block and an associated initialization vector from said memory (23) said vector changing for each block; and
applying, for each block, a continuous decyphering algorithm as a function of a key (K) specific to the integrated circuit and using, to generate a decyphering key (Cb), the initialization vector associated with the concerned block.

7. The method of claim 6, **characterized in that** the decyphered data blocks are stored in a cache memory (33) integrated to the processor (30).

8. The method of claim 6, **characterized in that** the data cyphered by blocks and the associated initialization vectors are stored in a cache memory (332) integrated to the processor (40), before decyphering.

9. The method of any of claims 6 to 8, **characterized in that** said memory (23) is external to the integrated circuit.

10. A processor (30, 40) for exploiting data stored in an external memory (23), **characterized in that** it comprises means for implementing the cyphering method of any of claims 1 to 5 and the decyphering method of any of claims 6 to 9.

## Patentansprüche

1. Verfahren zur Verschlüsselung eines Datensatzes zur Speicherung in einem Speicher (23), mittels eines integrierten Prozessors (30,40), **dadurch gekennzeichnet , daß** es die folgenden Schritte kontinuierlich an einem Datenfluß ausführt:
Aufteilen des Datenflusses in Blöcke vorbestimmter Größe, und, für jeden Block:
Erzeugen eines Verschlüsselungsschlüssels (Cb) mittels eines Pseudo-Zufallsgenerators (10), welcher einen kontinuierlichen Verschlüsselungsalgorithmus abhängig von einem Schlüssel (K) ausführt, der einem integrierten Schaltkreis und einem Anfangsvektor (IV) zugehört, der sich für jeden Block ändert;
kontinuierliches Kombinieren des Datenblocks und des entsprechenden Schlüssels (Cb); und
Speichern jedes verschlüsselten Blocks und desjenigen Initialisierungsvektors, dei zum' Verschlüsseln desselben gedient hat, in dem Speicher (23)

2. Verfahren nach Anspruch 1, wobei die Kombination eine XOR-Konrbination ist

3. Verfahren nach Anspruch oder 2, wobei die Größe des Verschlüselugsschlissels (Cb) der Blockgröße entspricht

4. Verfahren nach einem der Ansprüche 1 bis 3, wobei den Schlüssel (K), welcher dem integrierten Schaltkreis (30, 40) zugehört, von diesem erzeugt ist

5. Verfahren nach einem der Ansprüche 1 bis 4, wobei sich dieses auf das Verschlüsseln eines beim Speichern ausfiilubaren Programms zur weiteren Ausführung in dem Speicher (23) bezieht.

6. Verfahren zur Entschlüsselung von Datenblöcken, die in einem Speicher (23) gespeichert sind, mittels eines integrierten Prozessors, **dadurch gekennzeichnet, daß** dieses aus de Ausführen der folgenden Schrüten besteht:
Lesen jedes Blocks und zugehörigen Initialisierungsvektors aus dem Speicher (23), wobei sich der Vektor mit jedem Block ändert; und
Anwenden, für jeden Block, eines kontinuierlichen Entschlüsselungsalgorithmus als Funktion eines Schlüssels (K), der dem integrierten Schaltkreis zugehört, und Verwenden des Initialisierungsvektors, der mit dem entsprechenden Block verknüpft ist, um einen Entschlüsselungsschlüssel (Cb) zu erzeugen

7. Verfahren nach Anspruch 6, wobei die entschlüsselten Datenblöcke in einem Cache-Speicher (33) gespeichert sind, der in dem Prozessor (30) integriert ist

8. Verfahren nach Anspruch 6, wobei die blockweise verschlüsselten Daten und die zugehörigen Initialisierungsvektoren vor dem Entschlüsseln in einem Cache-Speicher (332) gespeichert sind, der in dem Prozessor (40) integriert ist

9. Verfahren nach einem der Ansprüche 6 bis 8, wobei den Speicher (23) extern zu dem integrierten Schaltkreis vorgesehen ist.

10. Prozessor (30, 40) zum Auswerten der gespeicherten Daten in einem externen Speicher (23), **dadurch gekennzeichnet, daß** dieser Mittel zum Ausführen des Verfahrens zur Verschlüsselung nach einem der Ansprüche 1 bis 5 und zum Ausführen des Verfahrens zur Entschlüsselung nach einem der Ansprüche 6 bis 9 umfaßt
